# EUROPEAN PATENT SPECIFICATION

(11) **EP 0 418 872 B1**
(45) Date of publication and mention of the grant of the patent: **06.12.1995**
(21) Application number: 90118051.3
(22) Date of filing: 19.09.1990
(51) Int. Cl.: G02B 6/28

(54) **Wide-band optical fiber coupler and its manufacturing method**
Breitbandiger optischer Faserkoppler und Herstellungsverfahren
Coupleur à fibres optiques à large bande et méthode pour sa fabrication

(30) Priority: 20.09.1989 JP 243980/89
(43) Date of publication of application: 27.03.1991
(73) Proprietor: JAPAN AVIATION ELECTRONICS INDUSTRY LIMITED, Shibuya-ku Tokyo (JP); NIPPON TELEGRAPH AND TELEPHONE CORPORATION, Tokyo (JP)
(72) Inventor: Sasaki, Hiroyuki, c/o Japan Aviation Electronics, Shibuya-ku, Tokyo (JP); Shimamura, Masato, c/o Japan Aviation Electronics, Shibuya-ku, Tokyo (JP); Takeuchi, Yoshiaki, Mito-shi, Ibaragi (JP); Hanafusa, Hiroaki, Mito-shi, Ibaragi (JP); Noda, Juichi, Mito-shi, Ibaragi (JP)
(74) Representative: Hoffmann, Eckart, Dipl.-Ing.

(56) References cited:
- EP-A- 0 234 665
- WO-A-88/09943
- WO-A-90/08968
- DE-A- 2 921 035
- US-A- 4 291 940
- APPLIED OPTICS, vol. 25, no. 19, 1 October 1986, pages 3443-3447, New York, NY, US; K. IMOTO et al.: "Plastic optical fiber star coupler"

## Description

### BACKGROUND OF THE INVENTION

The present invention relates to a wide-band optical fiber coupler having a reduced wavelength dependence of its splitting ratio and a method of making such an optical fiber coupler.

A conventional optical fiber coupler is produced by twisting together a prestretched optical fiber and an unstretched one, or by fusing together such optical fibers held in parallel juxtaposition with each other and then stretching their coupling region, as set forth in PCT Publication WO87/00934 or JP-A-108311/88.

In the manufacture of an optical fiber coupler having a reduced wavelength dependence of its splitting ratio, the ratio between the diameters of the two optical fibers in the region where they are fused together determines the optical characteristics of a finished optical fiber coupler. It is therefore an important problem to hold the diameter ratio of the two optical fibers at the fused portions thereof substantially constant.

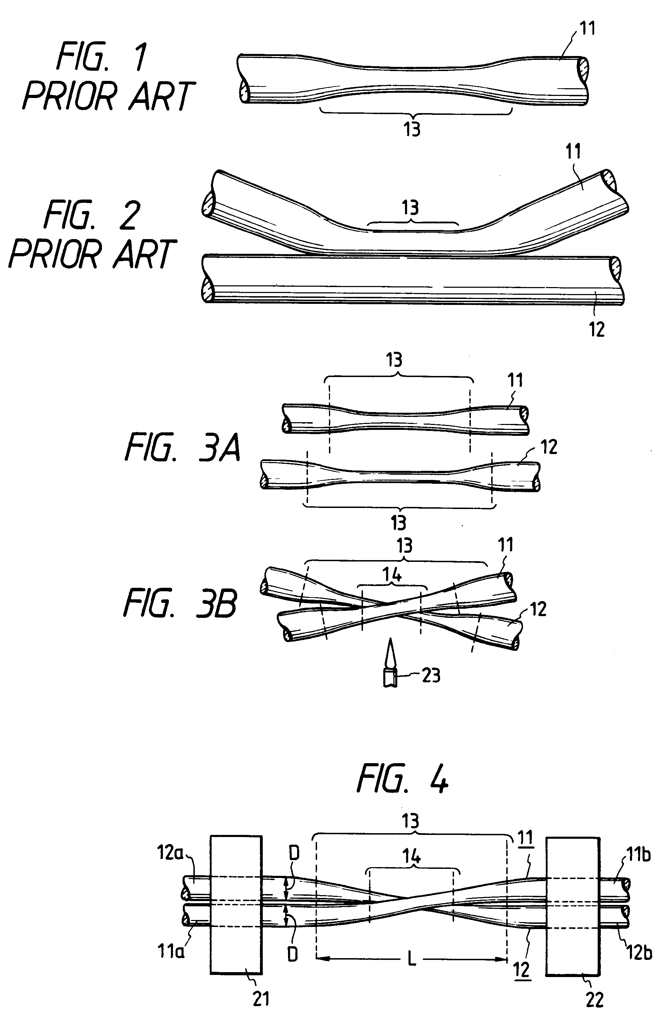

However, since the diameter of a reduced-diameter portion 13 of a prestretched optical fiber 11 varies along its longitudinal direction as shown in Fig. 1, the diameter ratio between the diameters of the two optical fibers changes with the position where they are fused together.

The conventional manufacturing method disclosed in the abovementioned PCT publication does not ever take into account a solution to such problem, and hence is very low in the yield rate of product.

In the above-mentioned JP-A-108311/88, it is proposed as a solution to the problem to reduce the diameter of a portion of an optical fiber by stretching the fiber or chemically etching the portion thereof so that the diameter of the reduced diameter portion cannot vary along the longitudinal direction of the fiber. It is very difficult, however, to draw or stretch the optical fiber while holding its diameter uniform lengthwise thereof. Moreover, even if the diameter of each optical fiber can be reduced uniformly over a certain length, it is also very hard to maintain the two optical fibers in parallel juxtaposition with each other. As shown in Fig. 2, the optical fibers each bend largely at both ends of their contact portions 13 disposed in parallel to each other, and this bending increases the transmission loss of the optical fiber coupler.

As mentioned above, the manufacture of an optical fiber coupler having a reduced wavelength dependence of its splitting ratio calls for stabilizing the ratio between the diameters of the two optical fibers in the region where they are fused together. To this end, the prior art stretches each optical fiber or decreases its diameter by chemical etching so that the diameter is uniform in its longitudinal direction. However, much difficulty is encountered in reducing the diameter of the optical fiber without changing the diameter lengthwise thereof, besides the reduced-diameter portion is smaller in diameter than its both end portions, and consequently, it is very difficult to maintain the two optical fibers in parallel juxtaposition with each other.

The document US-A-4,291,940 discloses an optical fiber coupler including two multi-mode optical fibers, each having a biconical taper section. At the biconical taper sections the fibers are twisted about each other and fused together to provide optical coupling between the fibers. The document mentions that if it is desired to have a preferential coupling, two fibers of different diameters may be used. In this case the diameter at the center of the reduced-diameter portion of one optical fiber will have to be assumed to be different from that of the other optical fiber.

### SUMMARY OF THE INVENTION

It is therefore an object of the present invention to provide an optical fiber coupler which has a reduced wavelength dependence of its splitting ratio even if the diameter of a reduced-diameter portion of each of the optical fibers varies lengthwise thereof, and in which their reduced-diameter portions need not be disposed in parallel juxtaposition with each other.

Another object of the present invention is to provide a method of producing such an optical fiber coupler.

These objects are achieved with an optical fiber coupler and a method of producing it, respectively, as claimed.

As shown in Fig. 1, the diameter of an optical fiber normally stretched while being heated is usually minimum at its center portion and the diameter increases toward both ends thereof. The portion where the diameter changing ratio is the smallest is the center portion. Also in the case where the diameter of an optical fiber is reduced by chemical etching, there is the tendency of the central portion becoming thinner than any other portions, though not so conspicuous as in the above case.

According to the present invention, since the optical fibers are fused together at their central intersecting portions where the diameter changing ratio is the smallest, the diameter ratio between the optical fibers in the coupling region is substantially constant and stable, thus permitting the fabrication of optical fiber couplers of uniform performance. Furthermore, since the present invention does not involve difficult work of stretching each optical fiber so that the diameter of the reduced diameter portion becomes constant in its longitudinal direction and of maintaining the optical fibers in parallel juxtaposition with each other as in the prior art, the optical fiber coupler of the present invention is easy of manufacture.

### BRIEF DESCRIPTION OF THE DRAWINGS

- Fig. 1: is a diagram showing a reduced-diameter portion 13 of an optical fiber for use in a conventional optical fiber coupler manufacturing method;
- Fig. 2: is a diagram for explaining a conventional manufacturing method;
- Fig. 3A: is a diagram for explaining a step involved in the manufacture of the optical fiber coupler according to the present invention;
- Fig. 3B: is a diagram for explaining a manufacturing step immediately subsequent to the step depicted in Fig. 3A; and
- Fig. 4: is a diagram for explaining an embodiment of the present invention.

### DESCRIPTION OF THE PREFERRED EMBODIMENT

Figs. 3A and 3B are diagrams for explaining the optical fiber coupler manufacturing method according to the present invention. As shown in Fig. 3A, optical fibers 11 and 12 are each previously heated and stretched or chemically etched over a desired length thereof to form a reduced-diameter portion 13. Then, the optical fibers 11 and 12 are disposed so that they intersect each other substantially, centrally of their reduced-diameter portions 13 as depicted in Fig. 3B. The intersecting portions 14 are fused together and the fused portion or coupling region and the neighboring regions are stretched until a desired coupling ratio is obtained.

The optical fibers 11 and 12 each having a clad outer diameter of 125 »m, for example, were prestretched by about 10 mm longitudinally thereof in the diameter reducing step shown in Fig. 3A and reduced-diameter portions 13 about 10 mm in length were formed with the smallest diameters at the centers of the reduced diameter portions being about 86 »m and 79 »m, respectively. Next, the optical fibers 11 and 12 were disposed to intersect each other substantially at the centers of their reduced-diameter portions 13 and fused together as depicted in Fig. 3B.

In this instance, as shown in Fig. 4, the optical fibers 11 and 12 were held in substantially parallel and adjacent relation to each other by means of jigs 21 and 22 outside their reduced-diameter portions 13, and the plane of arrangement of the optical fibers 11 and 12 in the jig 21 was flush with the plane of their arrangement in the jig 22. In other words, four segments 11a, 11b and 12a, 12b of the optical fibers 11 and 12 positioned at the outside of the reduced-diameter portions 13 are flush with one another, besides the segments lla and 12a of the optical fibers 11 and 12 at one side are exchanged in position with respect to the segments llb and 12b at the other side. Letting the length of the reduced-diameter portion 13 and the diameter of each optical fiber be represented by L and D, respectively, the angle of intersection between the optical fibers 11 and 12 is less than 2D/L rad at the largest. The intersecting portions 14 of the optical fibers 11 and 12 disposed as mentioned above and held by the jigs 21 and 22 were fused together by heating them with a burner 23, and thereafter were being stretched. The excess loss of the optical fiber coupler produced by the above-described method was measured. The excess loss of the optical fiber coupler of the prior art example (shown in Fig. 2) was about 1 dB, whereas the excess loss of the optical fiber coupler according to this embodiment was less than 0.5 dB -- this is a substantial improvement of its performance.

As described above, according to the present invention, two optical fibers are previously reduced in their diameter over a predetermined length, respectively, and are disposed to intersect each other at a small angle substantially at the centers of their reduced-diameter portions where the changing ratios of their reduced diameters are minimum, and then are fused together. Consequently, the ratio between the diameters of the two fused portions of the two optical fibers remains substantially constant, permitting the fabrication of optical fiber couplers of uniform performance, in particular, whose excess loss is stable at a small value. Moreover, the reduced-diameter portions are not maintained in parallel juxtaposition with each other, but intersect each other, so that the present invention allows ease in producing the optical fiber coupler and improves productivity accordingly.

It will be apparent that many modifications and variations may be effected without departing from the scope of the novel concepts of the present invention as claimed.

## Claims

1. A wide-band optical fiber coupler comprising:
a first and a second optical fiber (11, 12) each having a longitudinally extending reduced-diameter portion (13) with the diameter at the center of the reduced-diameter portion of the first optical fiber being different from that of the second optical fiber,
the two optical fibers intersecting each other at a small angle substantially at the centers of their respective reduced-diameter portions where the diameters are substantially the smallest, the optical fibers being fused together, only at the portion (14) where said centers of the reduced-diameter portions intersect, and stretched, and
said optical fibers having further portions (11a, 11b, 12a, 12b) at opposing ends of the coupler which are disposed adjacent and in parallel to each other and in the same plane on either side of said reduced-diameter portions, the respective positions of said further portions (11a, 12a) at one end of the coupler being exchanged relative to the respective positions of said further portions (11b, 12b) at the other end of the coupler.

2. A method of producing a wide-band optical fiber coupler, comprising the steps of:
heating and stretching or chemically etching a portion of each of a first and a second optical fiber (11, 12) to reduce their diameters over predetermined lengths thereof so as to form reduced-diameter portions (13) with the diameters at the center of the reduced-diameter portions being different from each other;
disposing the two optical fibers such that they are in contact at the reduced-diameter portions thereof and intersect each other at a small angle substantially at the centers of their reduced-diameter portions where the diameters are substantially the smallest and holding further portions (11a, 11b, 12a, 12b) of the optical fibers in parallel and adjacent relation to each other in the same plane at either side of said reduced-diameter portions, the respective positions of said further portions (11a, 12a) at one end of the coupler being exchanged relative to the respective positions of said further portions (11b, 12b) at the other end of the coupler; and
fusing and stretching together the intersecting portions (14) of the optical fibers such that the optical fibers are fused only at the portion (14) where they intersect.

## Patentansprüche

1. Optischer Breitband-Faserkoppler umfassend:
eine erste und eine zweite optische Faser (11, 12), die je einen sich in Längsrichtung erstreckenden Abschnitt (13) verringerten Durchmessers aufweisen, wobei der Durchmesser in der Mitte des Abschnitts verringerten Durchmessers der ersten optischen Faser von dem der zweiten optischen Faser verschieden ist,
wobei sich die beiden optischen Fasern im wesentlichen an der Mitte jeweils ihres Abschnitts verringerten Durchmessers, wo die Durchmesser im wesentlichen am kleinsten sind, unter einem kleinen Winkel kreuzen und die optischen Fasern nur an dem Abschnitt (14), wo die Mitten der Abschnitte verringerten Durchmessers sich kreuzen, miteinander verschmolzen sind und gestreckt sind, und
wobei die optischen Fasern weitere Abschnitte (11a, 11b, 12a, 12b) an entgegengesetzten Enden des Kopplers aufweisen, die nebeneinander und parallel zueinander und auf beiden Seiten der Abschnitte verringerten Durchmessers in derselben Ebene angeordnet sind, wobei die jeweiligen Lagen dieser weiteren Abschnitte (11a, 12a) an einem Ende des Kopplers relativ zu den jeweiligen Lagen dieser weiteren Abschnitte (11b, 12b) an dem anderen Ende des Kopplers vertauscht sind.

2. Verfahren der Herstellung eines optischen Breitband-Faserkopplers, umfassend die Schritte:
Erhitzen und Strecken oder chemisches Ätzen eines Abschnitts jeder einer ersten und einer zweiten optischen Faser (11, 12) zur Verringerung ihrer Durchmesser über vorbestimmte Längen derselben, um so Abschnitte (13) verringerten Durchmessers zu bilden, wobei die Durchmesser in der Mitte der Abschnitte verringerten Durchmessers voneinander verschieden sind,
Anordnen der beiden optischen Fasern derart, daß sie an den Abschnitten verringerten Durchmessers miteinander in Kontakt sind, und einander an den Mitten ihrer Abschnitte verringerten Durchmessers, wo die Durchmesser im wesentlichen am kleinsten sind, unter einem kleinem Winkel kreuzen, und Halten weiterer Abschnitte (11a, 11b, 12a, 12b) der optischen Fasern einander parallel und nebeneinander auf beiden Seiten der Abschnitte verringerten Durchmessers in derselben Ebene, wobei die jeweiligen Positionen der weiteren Abschnitte (11a, 12a) an einem Ende des Kopplers relativ zu den jeweiligen Positionen der weiteren Abschnitte (11b, 12b) an dem anderen Ende des Kopplers gegeneinander vertauscht sind, und
Verschmelzen und Strecken der sich kreuzenden Abschnitte (14) der optischen Fasern derart, daß die optischen Fasern nur an dem Abschnitt (14), wo sie sich kreuzen, verschmolzen werden.

## Revendications

1. Coupleur à fibres optiques à large bande comprenant :
une première et une seconde fibres optiques (11, 12) ayant chacune une partie de diamètre réduit (13) s'étendant longitudinalement, le diamètre au droit du centre de la partie de diamètre réduit de la première fibre optique étant différent de celui de la seconde fibre optique ;
les deux fibres optiques se coupant l'une l'autre suivant un petit angle sensiblement aux centres de leurs parties de diamètre réduit respectives, où les diamètres sont sensiblement les plus petits, les fibres optiques étant fondues ensemble, seulement au droit de la partie (14) où lesdits centres des parties de diamètre réduit se coupent, et étant étirées ; et
lesdites fibres optiques ayant des parties en retrait (11a, 11b, 12a, 12b) aux extrémités opposées du coupleur qui sont disposées adjacentes et parallèlement les unes aux autres et dans le même plan de chaque côté desdites parties de diamètre réduit, les positions respectives desdites parties en retrait (11a, 12a) au droit d'une extrémité du coupleur étant échangées par rapport aux positions respectives desdites parties en retrait (11b, 12b) au droit de l'autre extrémité du coupleur.

2. Procédé de production d'un coupleur à fibres optiques à large bande, comprenant les étapes :
de chauffage et d'étirage, ou d'attaque chimique, d'une partie de chacune d'une première et d'une seconde fibres optiques (11, 12) pour réduire leurs diamètres sur des longueurs prédéterminées de celles-ci de façon à former des parties de diamètre réduit (13), les diamètres au centre des parties de diamètre réduit étant différents l'un de l'autre ;
de disposition des deux fibres optiques de manière telle qu'elles soient en contact au droit de leurs parties de diamètre réduit et qu'elles se coupent l'une l'autre suivant un petit angle sensiblement aux centres de leurs parties de diamètre réduit où les diamètres sont sensiblement les plus petits ; et de maintien de parties en retrait (11a, 11b, 12a, 12b) des fibres optiques dans une disposition parallèle et adjacente les unes aux autres dans le même plan de chaque côté desdites parties de diamètre réduit, les positions respectives desdites parties en retrait (11a, 12a) au droit d'une extrémité du coupleur étant échangées par rapport aux positions respectives desdites parties en retrait (11b, 12b) au droit de l'autre extrémité du coupleur ; et
de fusion et d'étirage des parties d'intersection (14) des fibres optiques, de telle façon que les fibres optiques soient fondues seulement au droit de la partie (14) où elles se coupent.
